# EUROPÄISCHE PATENTSCHRIFT

(11) **EP 0 879 717 B1**
(45) Veröffentlichungstag und Bekanntmachung des Hinweises auf die Patenterteilung: **27.10.2004**
(21) Anmeldenummer: 98103335.0
(22) Anmeldetag: 26.02.1998
(51) Int. Cl.: B60H 1/00

(54) **Bedienelement**
Operating member
Elément de commande

(30) Priorität: 15.05.1997 DE 19720327
(43) Veröffentlichungstag der Anmeldung: 25.11.1998
(73) Patentinhaber: Preh GmbH, 97616 Bad Neustadt a.d. Saale (DE)
(72) Erfinder: Bauer, Karl-Heinz, 97616 Bad Neustadt (DE); Storath, Joachim, 97616 Salz (DE); Eckert, Gerold, 97616 Bad Neustadt (DE)
(74) Vertreter: Dietrich, Barbara, Dipl.-Ing.

(56) Entgegenhaltungen:
- DE-A- 2 453 893
- DE-A- 2 557 077
- DE-A- 3 434 302

## Beschreibung

Die Erfindung betrifft ein Bedienelement für eine Lüftungs-, Heizungs- oder Klimaanlage nach dem Oberbegriff des Anspruchs 1.

Ein derartiges Bedienelement ist beispielsweise in der DE 34 34 302 C3 dargestellt und weist die Besonderheit auf, daß ein drehbar gelagertes Zahnrad mit einem in einem Drehlager eines Grundkörpers um einen begrenzten Winkelbereich schwenkbaren Stellhebel zur Betätigung von Bowdenzügen im Sinne einer Mitnahme zusammenwirkt, wobei das Zahnrad eine Führungsnut aufweist und der Stellhebel ein einarmiger Hebel ist, der an einem Ende mit seinem Drehzapfen in dem Drehlager des Grundkörpers schwenkbar gelagert ist und am anderen Ende den eingehängten Bowdenzug trägt und zwischen Drehzapfen und Bowdenzug einen Führungszapfen trägt, der mit der Führungsnut des Zahnrades zusammenwirkt.

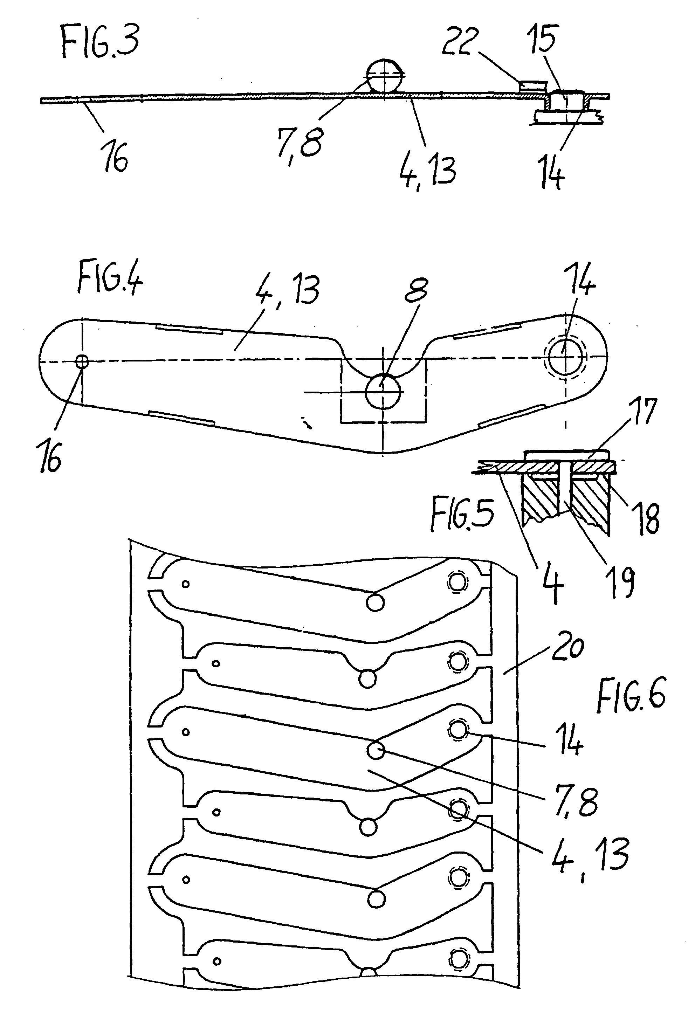

Wie der Druckschrift entnehmbar ist, sollen Drehzapfen und Führungszapfen an dem Stellhebel angeformt sein, nach der Zeichnung weist der Stellhebel eingepreßte Zapfen auf (Fig. 6).

Damit kann der Stellhebel mit den beiden Zapfen als ein Druckgußteil ausgeführt sein oder als ein Stanzblechteil mit eingepreßtem Zapfen.

Das Druckgußteil besteht aus einer druckspritzfähigen Legierung, die nur eine geringe Festigkeit aufweist, so daß zumindestens die Zapfen ausreichend groß dimensioniert sein müssen, um den Verstellkräften standzuhalten.

Hierdurch verringert sich der Winkelbereich der Verstellung und erhöht sich die Reibung gegenüber klein dimensionierten Zapfen.

Der 'gebaute' Stellhebel ist durch die Teilevielzahl teuer und störanfällig.

Hiervon ausgehend liegt der Erfindung die Aufgabe zugrunde, ein Bedienelement der angegebenen Art derart zu gestalten, daß eine Leichtgängigkeit der Verstellung bei vergrößertem Winkelbereich und verringerten Kosten erreichbar wird.

Diese Aufgabe wird durch die im Anspruch 1 angegebenen Merkmale gelöst. Vorteilhafte Weiterbildungen sind in den Unteransprüchen angegeben.

Mit der erfindungsgemäßen Ausbildung des angegebenen Bedienelements ist eine leichte Herstellbarkeit des Stellhebels als Rundstahl- oder Stanzblechausführung gegeben, die eine sehr glatte Oberfläche aufweisende Stahlkugel verursacht in der Führungsnut des Zahnrades nur eine geringe Reibung bzw. Abnutzung. Die aufgrund der hohen Festigkeit von Rundstahl oder Stanzblech möglichen kleinen Abmessungen ermöglichen eine Ausführung der Führungsnut für einen größeren Verstellwinkel und damit größeren Stellweg des Bowdenzuges, wobei ein im Durchmesser kleiner Lagerzapfen für das die Führungsnut aufweisende Bauteil zusätzlich wirkungsvoll ist, da die Führungsnut bis nahe an die Lagerzapfenmitte gezogen werden kann. Dort wirkt die größte Verstellkraft. Durch die Abtrennung des Stellhebels vom Stanzstreifen erst bei der Bedienelementmontage sind Vorteile in der Großserienfertigung erreicht worden. Bei Verwendung von Kunststoff für das Gehäuse lassen sich Schnapphaken für die Axialsicherung des Stellhebels ausbilden. Es ist vorgesehen, daß der Schnapphaken den Stellhebel im Mittenbereich der Drehlagerung belastet, wodurch die Reibung minimiert wird. Es kann vorteilhaft sein, wenn der Stellhebel unter Federkraft mit der Kugel gegen Rastvertiefungen der Führungsnut belastet ist. Hierdurch ist eine gegenüber bekannten Verrastungen verbilligte Ausführung möglich geworden.

Ausführungsbeispiele der Erfindung sind in der Zeichnung dargestellt und werden nachfolgend beschrieben.

Die Zeichnung zeigt:
Fig. 1
   eine Schnittdarstellung und
Fig. 2
   eine Draufsicht einer Zahnrad-Stellhebelanordnung eines erfindungsgemäßen Bedienelements und
Fig. 3 und 4
   Schnittdarstellungen
Fig. 5
   eine Draufsicht eines aus Stanzblech hergestellten Stellhebels und
Fig. 6
   eine Ansicht eines Stanzstreifens mit Stellhebelkonturen.

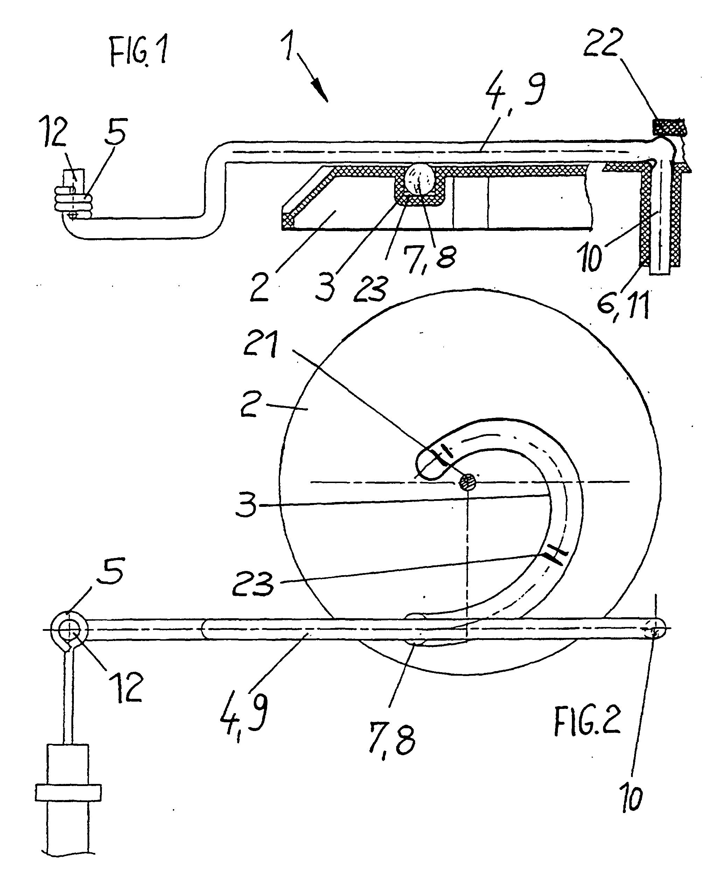

Fig. 1 zeigt schematisch ein Bedienelement 1 für eine Lüftungs-, Heizungs- oder Klimaanlage eines Kraftfahrzeuges, das über einen nicht dargestellten Drehknopf betätigbar ist und auf ein Zahnrad 2 mit einer Führungsnut 3 einwirkt, wobei ein Stellhebel 4 zur Betätigung eines Bowdenzugs 5 drehbar in einem Gehäusedrehlager 6 gelagert ist und mit einem Führungszapfen 7 in die Führungsnut 3 hineinragt und mit dieser im Sinne einer Mitnahme zusammenwirkt. Alternativ zu dieser Ausführung kann der Drehknopf jedoch auch auf eine Scheibe mit Führungsnut 3 einwirken oder selbst die Führungsnut 3 aufweisen.

Erfindungsgemäß ist nun vorgesehen, daß der Stellhebel 4 aus einem mit Stahl verschweißbaren Werkstoff besteht und der Führungszapfen 7 aus einer angeschweißten Stahlkugel 8.

In der Ausführung nach Fig. 1 und 2 ist vorgesehen, daß der Stellhebel 4 aus einem Rundstahl 9 mit angebogenem Drehlagerzapfen 10 besteht, der mit einer Gehäusedrehlageröffnung 11 zusammenwirkt, wobei der Bowdenzug 5 auf einen angebogenen Bowdenzugaufnahmezapfen 12 aufgesetzt ist.

Fig. 2 zeigt eine Draufsicht mit dem Zahnrad 2 und der Führungsnut 3 sowie dem aus Rundstahl 9 bestehenden Stellhebel 4 mit dem Drehlagerzapfen 10, der angeschweißten Stahlkugel 8 und dem Bowdenzug 5 auf dem Aufnahmezapfen 12.

Fig. 3 und 4 zeigen eine alternative Ausbildung des Stellhebels aus Fig. 1 und 2, bei der der Stellhebel 4 aus einem Stanzblech 13 mit einer angeformten Drehlagerbuchse 14 besteht, die mit einem Gehäusezapfen 15 zusammenwirkt, wobei der Bowdenzug 5 in eine Bowdenzugeinhängeöffnung 16 eingesetzt ist.

Fig. 5 zeigt ein alternatives Gehäusedrehlager 6, bei dem der Gehäusezapfen 15 beiderseits des Stellhebels 4 weit ausragende Axialwände 17, 18 zur Führung des Stellhebels 4 aufweist. Die obere Axialwand 17 ist hier Bestandteil eines eingepreßten Zapfens 19 und die untere Axialwand 18 ist am Gehäuse angeformt.

Fig. 6 zeigt einen Stanzstreifen 20 mit mehreren Stellhebelkonturen, bei dem vorgesehen ist, daß der Stellhebel 4 mit angeformter Drehlagerbuchse 14 und angeschweißter Stahlkugel 8 erst bei der Bedienelementmontage vom Stanzstreifen 20 abgetrennt wird.

Mit der erfindungsgemäßen Ausbildung des angegebenen Bedienelements 1 ist eine leichte Herstellbarkeit des Stellhebels 4 als Rundstahl- oder Stanzblechausführung gegeben, die eine sehr glatte Oberfläche aufweisende Stahlkugel 8 verursacht in der Führungsnut 3 des Zahnrades 2 nur eine geringe Reibung bzw. Abnutzung. Die aufgrund der hohen Festigkeit von Rundstahl oder Stanzblech möglichen kleinen Abmessungen ermöglichen eine Ausführung der Führungsnut 3 für einen größeren Verstellwinkel und damit größeren Stellweg des Bowdenzuges 5, wobei ein im Durchmesser kleiner Lagerzapfen 21 für das die Führungsnut 3 aufweisende Bauteil zusätzlich wirkungsvoll ist, da die Führungsnut 3 bis nahe an die Lagerzapfenmitte gezogen werden kann. Dort wirkt die größte Verstellkraft.

Durch die Abtrennung des Stellhebels 4 vom Stanzstreifen 20 erst bei der Bedienelementmontage sind Vorteile in der Großserienfertigung erreicht worden. Bei Verwendung von Kunststoff für das Gehäuse lassen sich Schnapphaken 22 für die Axialsicherung des Stellhebels 4 ausbilden. Wie aus Fig. 1 entnehmbar ist, ist vorgesehen, daß der Schnapphaken 22 den Stellhebel 4 im Mittenbereich der Drehlagerung 11 belastet, wodurch die Reibung minimiert wird.

Es kann vorteilhaft sein, wenn der Stellhebel 4 unter Federkraft mit der Kugel 8 gegen Rastvertiefungen 23 der Führungsnut 3 belastet ist. Hierdurch ist eine gegenüber bekannten Verrastungen verbilligte Ausführung möglich geworden.

## Patentansprüche

1. Bedienelement für eine Lüftungs-, Heizungs- oder Klimaanlage eines Kraftfahrzeuges, das über einen Drehknopf betätigbar ist und auf ein Zahnrad (2) mit einer Führungsnut (3) oder eine Scheibe mit der Führungsnut einwirkt oder selbst die Führungsnut aufweist, wobei ein Stellhebel (4) zur Betätigung eines Bowdenzugs (5) drehbar in einem Gehäusedrehlager (6) gelagert ist und mit einem Führungszapfen (7) in die Führungsnut hineinragt und mit dieser im Sinne einer Mitnahme zusammenwirkt, **dadurch gekennzeichnet, daß** der Stellhebel (4) aus einem mit Stahl verschweißbaren Werkstoff besteht und der Führungszapfen (7) aus einer angeschweißten Stahlkugel (8).

2. Bedienelelement nach Anspruch 1, **dadurch gekennzeichnet, daß** der Stellhebel (4) aus einem Rundstahl (9) mit angebogenem Drehlagerzapfen (10) besteht, der mit einer Gehäusedrehlageröffnung (11) zusammenwirkt, wobei der Bowdenzug (5) auf einen angebogenen Bowdenzugaufnahmezapfen (12) aufgesetzt ist.

3. Bedienelement nach Anspruch 1, **dadurch gekennzeichnet, daß** der Stellhebel (4) aus einem Stanzblech (13) mit einer angeformten Drehlagerbuchse (14) besteht, die mit einem Gehäusezapfen (15) zusammenwirkt, wobei der Bowdenzug (5) in eine Bowdenzugeinhängeöffnung (16) eingesetzt ist.

4. Bedienelement nach Anspruch 3, **dadurch gekennzeichnet, daß** der Gehäusezapfen (15, 19) beiderseits des Stellhebels (4) weit ausragende Axialwände (17, 18) zur Führung des Stellhebels (4) aufweist.

5. Bedienelement nach Anspruch 3 oder 4, **dadurch gekennzeichnet, daß** der Stellhebel (4) mit angeformter Drehlagerbuchse (14) und angeschweißter Stahlkugel (8) erst bei der Bedienelementmontage von einem Stanzstreifen (20) abgetrennt wird.

6. Bedienelement nach einem der vorstehenden Ansprüche 1 bis 3, **dadurch gekennzeichnet, daß** das aus Kunststoff bestehende Gehäuse Schnapphaken (22) zur Axialsicherung des in die Drehlagerung (11) oder den Gehäusezapfen (15) gesetzten Stellhebel (4) aufweist.

7. Bedienelement nach Anspruch 6, **dadurch gekennzeichnet, daß** der Schnapphaken (22) den Stellhebel (4) im Mittenbereich der Drehlagerung (11) belastet.

8. Bedienelement nach einem der vorstehenden Ansprüche, **dadurch gekennzeichnet, daß** der Stellhebel (4) unter Federkraft mit der Kugel (8) gegen Rastvertiefungen (23) der Führungsnut (3) belastet ist.

## Claims

1. Operating element for a ventilation, heating or air conditioning system of a motor vehicle, which element can be actuated via a rotary knob and acts on a gearwheel (2) having a guide groove (3) or on a disc having the guide groove or contains the guide groove itself, an adjusting lever (4) for actuating a bowden cable (5) being mounted rotatably in a rotary bearing (6) of the housing and projecting with a guide pin (7) into the guide groove and interacting therewith with the effect of being carried along, **characterized in that** the adjusting lever (4) consists of a material which can be welded to steel, and the guide pin (7) consists of a steel ball (8) which is welded on.

2. Operating element according to Claim 1, **characterized in that** the adjusting lever (4) consists of round bar steel (9) with a rotary bearing pin (10) which is integrally bent on it and interacts with a rotary-bearing opening (11) of the housing, the bowden cable (5) being placed onto an integrally bent-on bowden cable-holding pin (12).

3. Operating element according to Claim 1, **characterized in that** the adjusting lever (4) consists of a punching sheet (13) with an integrally formed rotary-bearing bushing (14) which interacts with a housing pin (15), the bowden cable (5) being inserted into a bowden-cable-fitting opening (16).

4. Operating element according to Claim 3, **characterized in that** the housing pin (15, 19) has axial walls (17, 18) which protrude a good distance on both sides of the adjusting lever (4) and are intended for guiding the adjusting lever (4).

5. Operating element according to Claim 3 or 4, **characterized in that** the adjusting lever (4) with the integrally formed rotary-bearing bushing (14) and welded-on steel ball (8) is not separated from a punched-out strip (20) until the installation of the operating element.

6. Operating element according to one of the preceding Claims 1 to 3, **characterized in that** the housing, which consists of plastic, has snap-in hooks (22) for axially securing the adjusting lever (4) placed into the rotary mounting (11) or the housing pin (15).

7. Operating element according to Claim 6, **characterized in that** the snap-in hook (22) loads the adjusting lever (4) in the central region of the rotary mounting (11).

8. Operating element according to one of the preceding claims, **characterized in that** the adjusting lever (4) is loaded under spring force by the ball (8) against latching depressions (23) of the guide groove (3).

## Revendications

1. Actionneur pour une installation de ventilation, de chauffage ou de climatisation d'un véhicule automobile, pouvant être actionné par le biais d'un bouton tournant et qui agit sur une roue dentée (2) avec une rainure de guidage (3) ou un disque avec la rainure de guidage ou qui présente lui-même la rainure de guidage, un levier de commande (4) pour l'actionnement d'un câble Bowden (5) étant monté à rotation dans un palier rotatif du boîtier (6) et pénétrant avec un tourillon de guidage (7) dans la rainure de guidage et coopérant avec celle-ci dans le sens d'un entraînement **caractérisé en ce que** le levier de commande (4) se compose d'un matériau pouvant être soudé avec de l'acier et le tourillon de guidage (7) se compose d'une bille d'acier (8) soudée.

2. Actionneur selon la revendication 1, **caractérisé en ce que** le levier de commande (4) se compose d'un acier rond (9) avec un tourillon de palier rotatif (10) cintré, qui coopère avec une ouverture du palier rotatif du boîtier (11), le câble Bowden (5) étant placé sur un tourillon de logement de câble Bowden (12) cintré.

3. Actionneur selon la revendication 1, **caractérisé en ce que** le levier de commande (4) se compose d'une tôle découpée (13) avec une douille de palier rotatif formée (14) qui coopère avec un tourillon de boîtier (15), le câble Bowden (5) étant inséré dans une ouverture d'accrochage de câble Bowden (16).

4. Actionneur selon la revendication 3, **caractérisé en ce que** le tourillon de boîtier (15, 19) présente des parois axiales (17, 18) sortant largement des deux côtés du levier de commande (4), pour le guidage du levier de commande (4).

5. Actionneur selon la revendication 3 ou 4, **caractérisé en ce que** le levier de commande (4) avec la douille de palier rotatif formée (14) et la bille d'acier soudée (8) est seulement séparé d'un ruban estampé (20) lors du montage de l'actionneur.

6. Actionneur selon l'une quelconque des revendications 1 à 3, **caractérisé en ce que** le boîtier se composant de plastique présente des crochets d'encliquetage (22) pour la fixation axiale du levier de commande (4) placé dans le palier rotatif (11) ou le tourillon de boîtier (15).

7. Actionneur selon la revendication 6, **caractérisé en ce que** le crochet d' encliquetage (22) sollicite le levier de commande (4) dans la région centrale du palier rotatif (11).

8. Actionneur selon l'une quelconque des revendications précédentes, **caractérisé en ce que** le levier de commande (4) est sollicité par une force de ressort avec la bille (8) contre des creux d'encliquetage (23) de la rainure de guidage (3).
